# EUROPÄISCHE PATENTSCHRIFT

(11) **EP 1 756 437 B1**
(45) Veröffentlichungstag und Bekanntmachung des Hinweises auf die Patenterteilung: **17.12.2008**
(21) Anmeldenummer: 05758655.4
(22) Anmeldetag: 15.06.2005
(51) Int. Cl.: F16B 37/12

(54) **BAUTTEIL MIT EINEM DRAHTGEWINDEEINSATZ AUS MAGNESIUM- ODER ALUMINIUMLEGIERUNG**
WORK PIECE WITH A WIRE THREADED INSERT MADE OF MAGNESIUM OR ALUMINIUM ALLOY
ELEMENT DE CONSTRUCTION AVEC UN INSERT DE FILETAGE EN FIL METALLIQUE REALISE DANS UN ALLIAGE DE MAGNESIUM OU D'ALUMINIUM

(30) Priorität: 15.06.2004 DE 202004009409 U
(43) Veröffentlichungstag der Anmeldung: 28.02.2007
(73) Patentinhaber: Böllhoff Verbindungstechnik GmbH, 33649 Bielefeld (DE)
(72) Erfinder: GRUBERT, Klaus, Friedrich, 31675 Bückeburg (DE)
(74) Vertreter: Hauck Patent- und Rechtsanwälte
(86) Internationale Anmeldenummer: PCT/EP2005/006445
(87) Internationale Veröffentlichungsnummer: WO 2005/124165

(56) Entgegenhaltungen:
- EP-A- 0 881 398
- GB-A- 2 163 510
- US-A- 5 312 214
- US-A1- 2001 014 263

## Beschreibung

Die vorliegende Erfindung betrifft einen Drahtgewindeeinsatz aus einem wendelförmig gewickelten Drahtkörper zum Einsetzen in eine Gewindebohrung eines Bauteils.

Derartige Drahtgewindeeinsätze werden zum Erhöhen der Gewindetragfähigkeit von Gewinden in Bauteilen geringer Festigkeit oder für Reparaturzwecke zum Ausbessern beschädigter Gewinde verwendet. Sie müssen daher eine entsprechend hohe Festigkeit haben und bestehen üblicherweise aus Stahl. Eine der Schwierigkeiten bei der Verwendung von Drahtgewindeeinsätzen aus Stahl besteht in der Neigung des Stahls zu Kontaktkorrosion gegenüber bestimmten Aufnahmegewindewerkstoffen und Kaltverschweißen (Galling) gegenüber bestimmten Schraubenwerkstoffen.

Aus der EP 1 070 860 ist es bekannt geworden, Drahtgewindeeinsätze aus Stahl mit Fluorpolymerbeschichtungen zu überziehen, um ihren Kontaktkorrosionswiderstand zu erhöhen. Die EP 1 122 449 schlägt die Verwendung einer speziellen stickstoffgehärteten Edelstahllegierung als Material für Drahtgewindeeinsätze vor, um deren Widerstand gegen Kaltverschweißen (Galling) zu verbessern.

Zur Vermeidung von Kontaktkorrosion zwischen Drahtgewindeeinsätzen und Bauteilen aus Magnesiumgusslegierungen ist es bereits bekannt geworden, als Material für die Drahtgewindeeinsätze eine hochfeste Aluminiumknetlegierung (AlZnMgCu 1,5) an der Oberfläche zu anodisieren bzw. eloxieren, so dass an der Oberfläche eine Aluminiumoxidschicht (Hardcoat) entsteht. Die Hardcoat-Oberfläche wirkt elektrisch isolierend, wodurch Kontaktkorrosion zwischen dem Basiswerkstoff des Drahtgewindeeinsatzes und der Magnesiumgusslegierung des Bauteils unterbunden wird. Zusätzlich hat diese Lösung den Vorteil, dass die Hardcoat-Oberfläche für eine galvanische Trennung zwischen einer Stahlschraube und dem aus der Magnesiumgusslegierung bestehenden Bauteil sorgt.

Nachteilig bei den oben beschriebenen Lösungen ist der relativ hohe Aufwand für die Oberflächenbehandlung bzw. Beschichtung der Drahtgewindeeinsätze zum Erhöhen ihres Widerstandes gegen Kontaktkorrosion.

Der vorliegenden Erfindung liegt die Aufgabe zugrunde, einen Drahtgewindeeinsatz aus Werkstoffen zu schaffen, die keine aufwendige Nachbehandlung erfordern und dennoch widerstandsfähig gegen Kontaktkorrosion insbesondere in Bauteilen aus Magnesium- und Aluminiumgusslegierungen sind.

Diese Aufgabe wird jeweils mit einem Bauteil gemäß Anspruch 1 oder 5 gelöst.

Gemäß einer Lösung der Erfindung besteht der Drahtkörper aus einer hochfesten aushärtbaren Aluminiumknetlegierung der Serie 6000 Al-Mg-Si ohne kontaktkorrosionsbeeinflussende Oberflächenbeschichtung. Bevorzugt werden Aluminiumknetlegierungen wie AlSi1MgCuMn (EN AW6056), wenn auch andere hochfeste aushärtbare Aluminiumknetlegierungen der Serie 6000 in Frage kommen.

Überraschenderweise hat sich gezeigt, dass diese Werkstoffe für Drahtgewindeeinsätze zur Verwendung in Bauteilen insbesondere aus Magnesiumgusslegierungen, aber auch aus Aluminiumgusslegierungen geeignet sind. Sie haben den Vorteil, dass sie insgesamt korrosionsunempfindlich und insbesondere spannungsrisskorrosionsunempfindlich sind, ohne dass sie mit einer gesonderten kontaktkorrosionsbeeinflussenden Oberflächenbeschichtung versehen werden müssten. Gegenüber den oben beschriebenen Drahtgewindeeinsätzen aus Aluminiumknetlegierungen mit einer Hardcoat-Oberfläche haben diese erfindungsgemäß ausgebildeten Drahtgewindeeinsätze zwar den Nachteil, dass eine galvanische Trennung zwischen den Bauteilen aus einer Magnesiumgusslegierung und Schrauben aus Stahllegierungen nicht gegeben ist. Insgesamt zeichnen sich jedoch die Drahtgewindeeinsätze gemäß der Erfindung durch hohe Wirtschaftlichkeit aus, da sie nicht mit einer kontaktkorrosionsbeeinflussenden Oberflächenbeschichtung versehen werden müssen. Außerdem haben derartige Aluminiumknetlegierungen eine relativ hohe Wärmeleitfähigkeit gegenüber beispielsweise Stahl, was für bestimmte Anwendungszwecke von besonderem Vorteil ist, wie noch genauer erläutert wird.

Gemäß einer anderen Lösung der Erfindung besteht der Drahtkörper des Drahtgewindeeinsatzes aus einer Magnesiumknetlegierung ohne kontaktkorrosionsbeeinflussende Oberflächenbeschichtung. In Frage kommen hier insbesondere Magnesiumknetlegierungen wie MgAl3Zn (AZ31) und MgAl6Zn (AZ61).

Überraschenderweise hat sich gezeigt, dass Magnesiumknetlegierungen trotz der bekannten Sprödigkeit von Magnesium für die Verwendung von Drahtgewindeeinsätzen in Bauteilen insbesondere aus Magnesium geeignet sind. Magnesiumknetlegierungen haben insbesondere den Vorteil, das sie insgesamt kontaktkorrosionsunempfindlich und insbesondere spannungsrisskorrosionsunempfindlich sind, ohne dass eine besonderen Oberflächenbehandlung bzw. -beschichtung erforderlich ist. Ein weiterer Vorteil von Magnesiumknetlegierungen besteht darin, dass sich eine ausreichende Zugfestigkeit des Drahtkörper allein durch die Kaltverfestigung beim Herstellen des Drahtgewindeeinsatzes erzielen lässt, ohne dass eine Wärmebehandlung des Drahtgewindeeinsatzes erforderlich ist. Außerdem haben Magnesiumknetlegierungen den Vorteil eines geringen Gewichtes wie auch einer hohen Wärmeleitfähigkeit, was für bestimmte Anwendungen von Vorteil ist.

Vorteilhafte Weiterbildungen und Ausgestaltungen der Erfindung ergeben sich aus den Unteransprüchen.

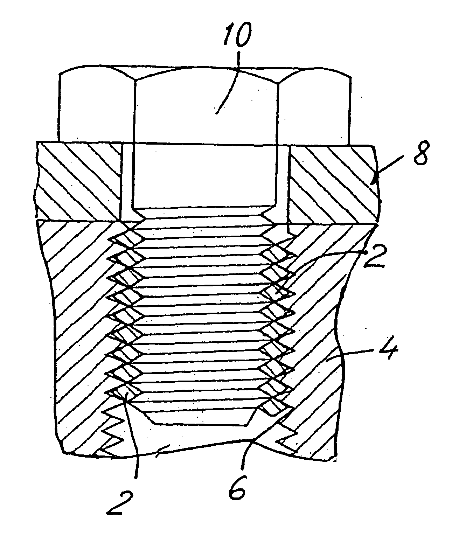

Anhand der einzigen Figur der Zeichnung, die in schematischer Weise eine Schraubverbindung mit einem Drahtgewindeeinsatz darstellt, werden Ausführungsbeispiele der Erfindung näher erläutert.

Der in der Figur dargestellte Drahtgewindeeinsatz 2 besteht in üblicher Weise aus einem wendelförmig gewickelten Drahtkörper, der in eine Gewindebohrung 6 eines Bauteils 4 eingesetzt ist, um die Tragfähigkeit des Gewindes der Gewindebohrung 6 zu erhöhen. In den Drahtgewindeeinsatz 2 ist eine Schraube 10 eingesetzt, die zum Verspannen eines Bauteils 8 mit dem Bauteil 4 dient.

Wie bereits eingangs erläutert, besteht gemäß einer Lösung der Erfindung der Drahtkörper des Drahtgewindeeinsatzes 2 aus einer hochfesten aushärtbaren Aluminiumknetlegierung der Serie 6000 Al-Mg-Si ohne kontaktkorrosionsbeeinflussende Oberflächenbeschichtung. Bevorzugt werden hochfeste aushärtbare Aluminiumknetlegierungen wie AlSi1MgCuMn (EN AW6056). Bei diesen Aluminiumknetlegierungen der Serie 6000 handelt es sich um Legierungen mit geringem Kupfergehalt (Cu < 1 %), die insbesondere gegenüber Magnesiumdruckgusslegierungen wie z.B. AZ91 korrosionsunempfindlich sind.

Um die Zugfestigkeit des Drahtgewindeeinsatzes 2 auf Werte von mehr als 400 N/mm² zu erhöhen, wird der Drahtgewindeeinsatz 2 einer entsprechenden Wärmebehandlung unterzogen. Ehe der Drahtgewindeeinsatz 2 in die Aufnahmebohrung 6 eingesetzt wird, wird er zweckmäßigerweise mit einem Trockengleitfilm versehen. Hierbei handelt es sich um wachsartige Substanzen, insbesondere polyethylenhaltige Substanzen, die die Gewindereibung zwischen dem Drahtgewindeeinsatz 2 und dem Gewinde der Gewindebohrung 6 einerseits und dem Gewinde der Schraube 10 andererseits bei der Montage verringern.

Wie bereits eingangs erwähnt, sind Drahtgewindeeinsätze aus derartigen Aluminiumknetlegierungen besonders geeignet zum Erhöhen der Gewindetragfähigkeit von Bauteilen aus Magnesiumgusslegierungen wie z.B. AZ91. Zum einen ist die Zugfestigkeit derartiger Drahtgewindeeinsätze aus Aluminiumknetlegierung (>400 N/mm²) deutlich höher als die Grundfestigkeit üblicher Magnesiumgusslegierungen. Zum andern haben derartige Aluminiumknetlegierungen gegenüber Magnesium eine hohe Korrosionsbeständigkeit, da Aluminium in der Spannungsreihe der Elemente nahe dem Magnesium ist.

Drahtgewindeeinsätze aus den angegebenen Aluminiumknetlegierungen sind nicht nur zum Erhöhen der Gewindetragfähigkeit, sondern auch zur Reparatur von beschädigten Gewinden einsetzbar. Ein spezieller Anwendungsfall ist die Befestigung von Zündkerzen aus Stahl in Gewindebohrungen von Zylinderköpfen aus Aluminium:
Wenn im Stand der Technik Gewindebohrungen eines derartigen Zylinderkopfes beschädigt waren, so wurde zu Reparaturzwecken ein Drahtgewindeeinsatz aus einem speziellen Edelstahl in die entsprechend aufgebohrte Gewindebohrung eingesetzt. Da Stahl eine geringe Wärmeleitfähigkeit hat, ergibt sich in diesen Fällen nach der Reparatur unter Umständen eine ungewünschte Veränderung des Wärmehaushaltes der Zündkerze.

Wenn nun erfindungsgemäß statt Drahtgewindeeinsätzen aus Stahl Drahtgewindeeinsätze aus einer der oben genannten Aluminiumknetlegierungen verwendet werden, wird das geschilderte Problem aufgrund der hohen Wärmeleitfähigkeit von Aluminiumlegierungen gelöst. Veränderungen im Wärmehaushalt der Zündkerze sind dann nicht mehr vorhanden.

In diesem Anwendungsfall nutzen daher Drahtgewindeeinsätze aus Aluminiumlegierungen nicht nur den Vorteil einer hohen Korrosionsbeständigkeit und eines geringen Gewichtes, sondern auch den Vorteil einer hohen Wärmeleitfähigkeit.

Als Werkstoff für die mit diesen Drahtgewindeeinsätzen zu verwendenden Schrauben kommt vorzugsweise Aluminiumlegierung in Frage, wenngleich auch für bestimmte Anwendungsfälle andere Werkstoffe wie insbesondere spezielle Stähle verwendet werden können.

Gemäß der zweiten Lösung der Erfindung besteht der Drahtkörper des Drahtgewindeeinsatzes 2 aus einer Magnesiumknetlegierung ohne kontaktkorrosionsbeeinflussende Oberflächenbeschichtung. Bevorzugt werden Magnesiumknetlegierungen wie MgAl3Zn (AZ31) und MgAl6Zn (AZ61).

Bei diesen Werkstoffen lässt sich eine Zugfestigkeit von mehr als 350 n/mm² allein durch die Kaltverfestigung beim Herstellen des Drahtgewindeeinsatzes erzielen, ohne dass es einer Wärmebehandlung bedarf. Auch bei dieser Lösung der Erfindung wird der Drahtgewindeeinsatz zum Erzielen eines optimalen Gewindereibverhaltens des Drahtgewindeeinsatzes bei der Montage mit einem Trockengleitfilm versehen.

Überraschenderweise hat sich gezeigt, dass trotz der von Hause aus bestehenden Sprödigkeit von Magnesium Drahtgewindeeinsätze aus den genannten Magnesiumknetlegierungen aus Werkstoff für Drahtgewindeeinsätze geeignet ist. Mit besonderem Vorteil werden Drahtgewindeeinsätze aus derartigen Magnesiumknetlegierungen in Verbindung mit Bauteilen aus Magnesiumgusslegierungen wie z.B. AZ91 verwendet, die heutzutage auf vielen Gebieten der Technik zum Einsatz kommen. Bei dieser Werkstoffkombination ist das Problem der Kontaktkorrosion naturgemäß vollständig vermieden. Da ferner für diese Drahtgewindeeinsätze weder eine Oberflächenbeschichtung noch eine Wärmebehandlung erforderlich sind, zeichnet sich diese Lösung der Erfindung durch hohe Wirtschaftlichkeit aus.

Drahtgewindeeinsätze aus den genannten Magnesiumknetlegierungen können wiederum sowohl zum Erhöhen der Gewindetragfähigkeit in Bauteilen aus einem Werkstoff geringer Festigkeit wie auch zum Ausbessern beschädigter Gewindebohrungen verwendet werden.

Als Werkstoff für die in Verbindung mit diesen Gewindeeinsätzen verwendbaren Schrauben kommen in erster Linie Aluminiumlegierungen in Frage, wenngleich auch andere Werkstoffe wie Stahl verwendet werden können.

## Patentansprüche

1. Bauteil mit einem Drahtgewindeeinsatz aus einem wendelförmig gewickelten Drahtkörper, der in eine Gewindebohrung (6) des Bauteils (4) eingesetzt ist, wobei der Drahtkörper aus einer hochfesten aushärtbaren Aluminiumknetlegierung der Serie 6000 Al-Mg-Si ohne kontaktkorrosionsbeeinflussende Oberflächenbeschichtung besteht und das Bauteil (4) aus einer Magnesium- oder Aluminiumgusslegierung besteht.

2. Bauteil mit Drahtgewindeeinsatz nach Anspruch 1, **dadurch gekennzeichnet, dass** die hochfeste aushärtbare Aluminiumknetlegierung AlSi1MgCuMn ist.

3. Bauteil mit Drahtgewindeeinsatz nach Anspruch 1 oder 2, **dadurch gekennzeichnet, dass** der Drahtkörper zum Erhöhen seiner Zugfestigkeit wärmebehandelt ist.

4. Bauteil mit Drahtgewindeeinsatz nach einem der vorhergehenden Ansprüche, **dadurch gekennzeichnet, dass** der Drahtkörper mit einem Trockengleitfilm versehen ist.

5. Bauteil mit einem Drahtgewindeeinsatz aus einem wendelförmig gewickelten Drahtkörper, der in eine Gewindebohrung (6) des Bauteils (4) eingesetzt ist, wobei der Drahtkörper aus einer Magnesiumknetlegierung ohne kontaktkorrosionsbeeinflussende Oberflächenbeschichtung besteht und das Bauteil (4) aus einer Magnesium- oder Aluminiumlegierung besteht.

6. Bauteil mit Drahtgewindeeinsatz nach Anspruch 5, **dadurch gekennzeichnet, dass** die Magnesiumknetlegierung MgAl3Zn oder MgAl6Zn ist.

7. Bauteil mit Drahtgewindeeinsatz nach Anspruch 5 oder 6, **dadurch gekennzeichnet, dass** der Drahtkörper ohne Wärmebehandlung eingesetzt wird.

8. Bauteil mit Drahtgewindeeinsatz nach einem der Ansprüche 5 bis 7, **dadurch gekennzeichnet, dass** der Drahtkörper mit einem Trockengleitfilm versehen ist.

## Claims

1. A structural member including a wire thread insert made of a helically coiled wire member inserted into a threaded bore (6) of the structural member (4), wherein the wire member is made of a high-strength hardenable aluminium forging alloy of series 6000 Al-Mg-Si without any contact corrosion influencing surface coating and the structural member (4) is made of a cast magnesium or cast aluminium alloy.

2. The structural member including a wire thread insert of claim 1, wherein the high-strength hardenable aluminium forging alloy is AlSi1MgCuMn.

3. The structural member including a wire thread insert according to claim 1 or 2, wherein the wire member has been tempered to increase its tensile strength.

4. The structural member including a wire thread insert according to any of the preceding claims, wherein the wire member is provided with a dry gliding film.

5. A structural member including a wire thread insert made of a helically coiled wire member inserted into a threaded bore (6) of the structural member (4), wherein the wire member is made of a magnesium forging alloy without any contact corrosion influencing surface coating and the structural member (4) is made of a magnesium alloy or aluminium alloy.

6. The structural member including a wire thread insert according to claim 5, wherein the magnesium forging alloy is MgAl3Zn or MgAl6Zn.

7. The structural member including a wire thread insert according to claim 5 or 6, wherein the wire member has not been subjected to tempering.

8. The structural member including a wire thread insert according to any of the claims 5 to 7, wherein the wire member is provided with a dry gliding film.

## Revendications

1. Elément de construction avec un insert de filetage en fil métallique à partir d'un corps de fil métallique enroulé de manière hélicoïdale qui est inséré dans un alésage fileté (6) de l'élément de construction (4), le corps de fil métallique étant composé d'un alliage corroyé d'aluminium thermodurcissable à haute résistance de la série 6000 Al-Mg-Si sans revêtement de surface ayant une influence sur la corrosion par contact et l'élément de construction (4) étant composé d'un alliage de fonte de magnésium ou d'aluminium.

2. Elément de construction avec insert de filetage en fil métallique selon la revendication 1, **caractérisé en ce que** l'alliage corroyé d'aluminium thermodurcissable à haute résistance est du AlSi1MgCuMn.

3. Elément de construction avec insert de filetage en fil métallique selon la revendication 1 ou 2, **caractérisé en ce que** le corps de fil métallique a subi un traitement thermique pour augmenter sa résistance à la traction.

4. Elément de construction avec insert de filetage en fil métallique selon l'une des revendications précédentes, **caractérisé en ce que** le corps de fil métallique est pourvu d'un film lubrifiant sec.

5. Elément de construction avec un insert de filetage en fil métallique à partir d'un corps de fil métallique enroulé de manière hélicoïdale, qui est inséré dans un alésage fileté (6) de l'élément de construction (4), le corps de fil métallique étant composé d'un alliage corroyé de magnésium sans traitement de surface ayant une influence sur la corrosion par contact et l'élément de construction (4) étant composé d'un alliage de magnésium ou d'aluminium.

6. Elément de construction avec insert de filetage en fil métallique selon la revendication 5, **caractérisé en ce que** l'alliage corroyé de magnésium est du MgAl3Zn ou MgAl6Zn.

7. Elément de construction avec insert de filetage en fil métallique selon la revendication 5 ou 6, **caractérisé en ce que** le corps de fil métallique est utilisé sans traitement thermique.

8. Elément de construction avec insert de filetage en fil métallique selon l'une des revendications 5 à 7, **caractérisé en ce que** le corps de fil métallique est pourvu d'un film lubrifiant sec.
